# FASCICULE DE BREVET EUROPEEN

(11) **EP 0 544 563 B1**
(45) Date de publication et mention de la délivrance du brevet: **24.01.1996**
(21) Numéro de dépôt: 92403106.5
(22) Date de dépôt: 18.11.1992
(51) Int. Cl.: F16B 7/04

(54) **Dispositif pour l'assemblage de deux éléments ainsi que les assemblages obtenus**
Vorrichtung zum Zusammenbau von zwei Teilen und die erhaltenen Zusammenbauten
Device for the assembly of two parts and the assemblies obtained

(30) Priorité: 25.11.1991 FR 9114479
(43) Date de publication de la demande: 02.06.1993
(73) Titulaire: SOCIETE DE FABRICATION ET DE DIFFUSION, F-77292 Mitry Mory (Seine & Marne) (FR)
(72) Inventeur: Rossi, Roland, Montfermeil, (Seine Saint Denis) (FR)
(74) Mandataire: Cabinet Pierre HERRBURGER

(56) Documents cités:
- FR-A- 2 458 329
- FR-A- 2 514 434
- FR-A- 2 561 321
- GB-A- 877 149

## Description

Par les brevets français FR-A-2458329, FR-A-2514434 et FR-A-2561321, on connaît déjà des brides de raccordement de ce genre réalisés à partir d'une bande de matériau, par exemple de métal, refermée sur elle-même, et constituant un anneau définissant une pièce creuse. Les deux bordures de la bande sont gauches dans l'espace et délimitent chacune un logement dont l'axe est, de manière générale, transversal à l'axe de l'anneau et dont la forme et les dimensions correspondent sensiblement à celles de l'un des éléments à assembler qu'elle doit recevoir, les fonds de ces logements étant par ailleurs situés dans le même plan.

Suivant ce brevet, le positionnement des deux éléments est obtenu soit à l'aide de vis pointeau vissées dans la bride et venant s'appliquer sur l'un des éléments à assembler afin de les écarter l'un de l'autre, soit à l'aide de clavettes.

Vis-à-vis de ces dispositifs connus, la présente invention concerne un dispositif d'assemblage de deux éléments comprenant une bride constituée d'une bande de matériau formant un anneau fermé définissant une pièce creuse, les bordures de la bande étant gauches dans l'espace et délimitant chacune un logement dont l'axe est, de manière générale, transversal à l'axe de l'anneau et dont la forme et les dimensions correspondent sensiblement à celles de l'un des éléments à assembler qu'elle doit recevoir, dispositif caractérisé en ce que les fonds de ces logements définissent des lignes de fond qui sont écartées l'une de l'autre et en ce que les deux éléments disposés chacun dans leur logement de la bride, sont reliés par un moyen de serrage.

L'invention est représentée à titre d'exemple non limitatif sur les dessins ci-joints dans lesquels :
- la figure 1 est une vue en perspective schématique d'une bride de raccordement conforme à l'invention,
- la figure 2 est une vue en coupe suivant A-A de la bride de la figure 1.

La présente invention a en conséquence pour but la réalisation d'un assemblage comprenant une bride de raccordement, qui permet un assemblage rigide, sans jeu et solide de deux éléments quelconques à assembler, quelle que soit la nature de ces éléments, tubes, profilés, panneaux, etc. et quelle que soit également l'inclinaison de ces deux éléments l'un par rapport à l'autre.

Egalement, ces résultats sont obtenus quels que soient les dimensions et le poids des éléments à assembler, les dimensions de la bride et le matériau qui la constitue devant seulement être adaptés à chaque cas.

La bride 1 représentée sur les dessins ci-joints est obtenue soit directement par moulage, soit indirectement à partir d'une portion de tube qui est ensuite déformée par un outillage adapté et, d'une manière générale, cette bride est constituée d'une bande de matériau formant un anneau fermé définissant une pièce creuse dont les deux bordures 2 et 3 des extrémités ouvertes, présentent des formes gauches dans l'espace et définissent chacune un logement 2₁, 3₁ dont l'axe X-X respectivement Y-Y est, d'une manière générale, transversal à l'axe Z-Z de l'anneau.

Dans l'exemple représenté, la bride 1 est réalisée pour assurer l'assemblage mécanique d'un panneau 5 perpendiculairement à un tube 6 et les logements 2₁ et 3₁ sont respectivement, l'un de section générale rectangulaire, l'autre de section générale circulaire, dont les dimensions sont adaptées à l'épaisseur du panneau 5 ou au diamètre du tube 6. Ces logements 2₁ et 3₁ présentent ainsi des bordures de fond 2₂, 3₂ encadré par des bordures d'ailes 2₃, 3₃ destinées à encadrer le panneau 5 ou le tube 6 pour assurer leur maintien.

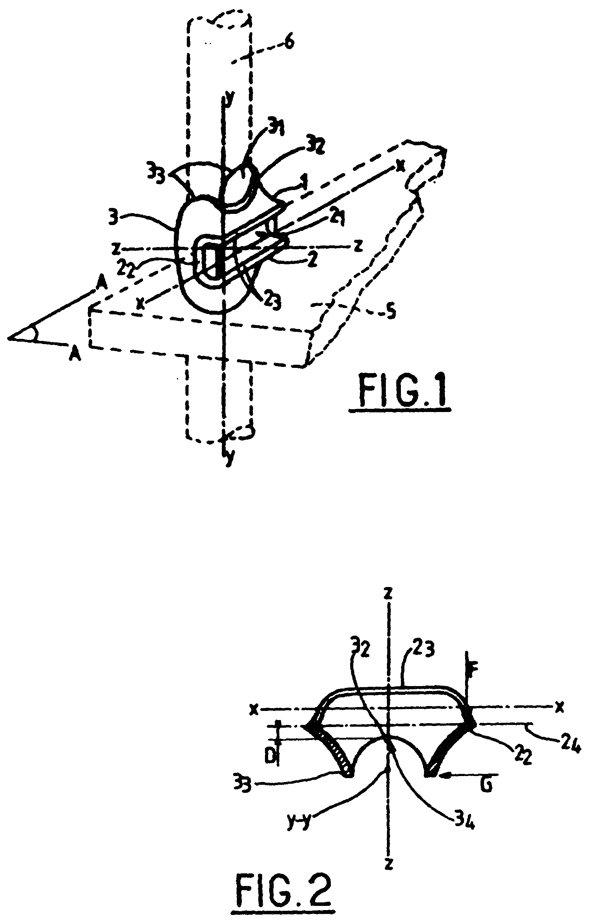

Ces logements 2₁ et 3₁ délimités par les zones de bordure de la bride, présentent des lignes de fond 2₄ et 3₄, déterminées par les bordures de fonds 2₂ et 3₂ de ces logements, qui sont écartées l'une de l'autre d'une distance D (figure 2). Autrement dit, avant toute déformation de la bride 1 par serrage des deux éléments 5 et 6 à l'aide d'un moyen de serrage tel qu'une vis, le panneau 5 et le tube 6, en appui dans le fond de leur logement, sont distants l'un de l'autre de cette distance D et ne viennent donc pas en contact l'un de l'autre.

Cette distance D des lignes de fond 2₄ et 3₄ résultant de la position des bordures de fonds 2₂ et 3₂ des logements 2₁ et 3₁ devra présenter une valeur minimum de l'ordre du millimètre pour les brides de petites dimensions destinées à l'assemblage d'éléments de 1 ou 2 cm d'épaisseur ou de diamètre, cette valeur augmentant avec les dimensions des éléments à assembler.

La distance D indiquée ci-dessus est uniquement donnée à titre d'exemple étant entendu que dans chaque cas le décalage minimum D des lignes de fond 2₄ et 3₄ sera déterminé en fonction de la structure de la bride (épaisseur et nature de la bande de matériau mis en oeuvre ainsi que des dimensions de la bride et des éléments à assembler) de façon que, comme on va l'expliquer ci-après, lors du serrage mécanique des deux éléments 5 et 6 à assembler à l'aide d'un moyen de serrage, il se produise une déformation de la bride essentiellement à hauteur des ailes 2₃ et 3₃ de façon que ces ailes se resserrent sur les éléments 5 et 6 afin de les assembler solidement et sans jeu l'un à l'autre.

De préférence, les ailes de ces logements seront initialement légèrement divergents par rapport à la périphérie des éléments qu'ils reçoivent.

Le moyen de serrage mis en oeuvre sera, en général, constitué par une vis ou un boulon disposé pour serrer les deux éléments 5 et 6 et passant à cet effet à l'intérieur de la partie creuse de la bride 1 suivant l'axe Z-Z. Tout autre moyen tendant à rapprocher les parties à assembler pourra être cependant prévu. Cette vis qui tend à rapprocher ces deux éléments 5 et 6 prend appui respectivement sur les fonds 2₂ et 3₂ des logements 2₁, 3₁ et provoque le rapprochement l'une de l'autre des ailes du logement opposé.

Ainsi, l'appui du panneau 5 sur le fond 2₂ du logement 2₁ (dans le sens de la flèche F sur la figure 2) a pour effet de créer une composante de pression transversale (dans le sens de la flèche G) visant à rapprocher les deux ailes 3₃ opposées. De même, la pression exercée par les tubes 6 sur le fond 3₂ du logement 3₁ a pour effet de tendre à rapprocher les ailes 2₃ du logement opposé 2₁.

Ce serrage des éléments 5 et 6 l'un vers l'autre pourra être effectué, compte tenu de la possibilité de déformation, élastique ou non, de la bride 1, jusqu'à ce que, du fait de cette déformation, les lignes de fond 2₄ et 3₄ se rencontrent, c'est-à-dire jusqu'à ce que les éléments 5 et 6 viennent au contact l'un de l'autre.

Lorsque la bride est obtenue indirectement par la déformation d'une portion de tube et non pas directement par moulage, la portion de tube mise en oeuvre sera en général cylindrique. Cependant, si les éléments à assembler sont d'épaisseur et de diamètre très différents, il sera possible d'utiliser comme élément annulaire de départ une pièce creuse de forme générale conique de façon qu'après déformation les bordures de forme gauche de la grande base et de la petite base du tronc de cône forment respectivement les logements pour les éléments de grandes dimensions et de petites dimensions.

De même, suivant l'exemple représenté, les lignes de fond 2₄ et 3₄ sont perpendiculaires l'une à l'autre afin d'assurer l'assemblage perpendiculaire des éléments 5 et 6. Il sera cependant possible de donner à ces lignes de fond une orientation différente l'une par rapport à l'autre, afin d'assurer l'assemblage des deux éléments 5 et 6 suivant un angle différent de 90°.

## Revendications

1. Dispositif d'assemblage de deux éléments comprenant une bride constituée d'une bande de matériau formant un anneau fermé (1) définissant une pièce creuse, les bordures (2 et 3) de la bande étant gauches dans l'espace et délimitant chacune un logement (2₁, 3₁) dont l'axe (X-X ; Y-Y) est, de manière générale, transversal à l'axe (Z-Z) de l'anneau et dont la forme et les dimensions correspondent sensiblement à celles de l'un des éléments (5, 6) à assembler qu'elle doit recevoir, dispositif caractérisé en ce que les fonds (2₂, 3₂) de ces logements définissent des lignes de fond (2₄, 3₄) qui sont écartées l'une de l'autre et en ce que les deux éléments disposés chacun dans leur logement de la bride, sont reliés par un moyen de serrage.

2. Dispositif conforme à la revendication 1, caractérisé en ce que le moyen de serrage est constitué par au moins une vis serrant les deux éléments (5 et 6) à assembler et traversant la bride suivant son axe (Z-Z).

## Patentansprüche

1. Vorrichtung zum Zusammenbau von zwei Teilen, die eine aus einem Materialband, das einen einen Hohlkörper definierenden geschlossenen Ring (1) bildet, bestehende Klemme umfaßt, wobei die Ränder (2 und 3) des Bands schief im Raum stehen und jeweils eine Aufnahme (2₁, 3₁) begrenzen, deren Achse (X-X; Y-Y) allgemein quer zur Achse (Z-Z) des Rings liegt und deren Form und Abmessungen im wesantlichen der bzw. denen eines der zuzammenzubauenden Teile (5, 6), die sie aufnehmen muß, entsprechen, dadurch gekennzeichnet, daß die Enden (2₂, 3₂) dieser Aufnahmen Endlinien (2₄, 3₄) definieren, die voneinander beabstandet sind, und daß die beiden jeweils in ihrer Aufnahme der Klemme angeordneten Teile über ein Spannmittel miteinander verbunden sind.

2. Vorrichtung nach Anspruch 1, dadurch gekennzeichnet, daß das Spannmittel aus mindestens einer Schraube besteht, die die beiden zusammenzubauenden Teile (5 und 6) zusammenspannt und die Klemme entlang deren Achse (Z-Z) durchdringt.

## Claims

1. A device for the assembly of two elements, comprising a clamp constituted by a band of material forming a closed ring (1) defining a hollow element, the edges (2 and 3) of the band being warped in space and each defining a housing (2₁, 3₁) the axis (X-X; Y-Y) of which is generally transverse the axis (Z-Z) of the ring and the shape and size of which correspond substantially to those of that element (5, 6) to be assembled which it is to house, the device being characterized in that the bases (2₂, 3₂) of these housings define base lines (2₄, 3₄) which are spaced apart, and in that the two elements, each disposed in its housing in the clamp, are fastened by securing means.

2. A device according to Claim 1, characterized in that the securing means are constituted by at least one screw securing the two elements (5 and 6) to be assembled and extending through the clamp along its axis (Z-Z).
